(19) Europäisches Patentamt
European Patent Office
Office européen des brevets

(11) Publication number: **0 062 343**
**B1**

(12) # EUROPEAN PATENT SPECIFICATION

(45) Date of publication of patent specification: **08.01.86**

(51) Int. Cl.$^4$: **C 09 J 3/14,** C 08 L 25/10, C 08 L 9/08

(21) Application number: **82102906.3**

(22) Date of filing: **05.04.82**

(54) **Small particle size latex useful as a pressure sensitive adhesive.**

(30) Priority: **03.04.81 US 251008**

(43) Date of publication of application:
**13.10.82 Bulletin 82/41**

(45) Publication of the grant of the patent:
**08.01.86 Bulletin 86/02**

(84) Designated Contracting States:
**BE DE FR GB IT NL SE**

(58) References cited:
**US-A-4 189 419**

(73) Proprietor: **THE DOW CHEMICAL COMPANY**
**2030 Dow Center Abbott Road P.O. Box 1967**
**Midland, MI 48640 (US)**

(72) Inventor: **Schwartz, James Edward**
**2403 Dilloway Drive**
**Midland Michigan, 48640 (US)**

(74) Representative: **Casalonga, Axel et al**
**BUREAU D.A. CASALONGA OFFICE JOSSE & PETIT Baaderstrasse 12-14**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 062 343 B1

## Description

The instant invention relates to latexes useful in sealing and adhesive applications, and particularly to latexes useful as pressure sensitive adhesives.

Pressure sensitive adhesives (PSAs) are adhesive materials which, when dried, possess a lasting aggressive tack which enables them to tenaciously adhere to a wide variety of substrates when applied with only light pressure. These adhesives are useful in a variety of applications including tapes, labels, wall coverings, floor tiles, wood veneers and hobby adhesives.

PSAs have traditionally been manufactured in solvent based systems. Recently, however, concerns over the cost of solvents, the flammability of solvents, regulations on solvent emissions and the energy required to keep the work place atmosphere solvent free, have made nonsolvent systems very desirable. While a few attempts have been made to produce a water based PSA, such attempts have generally failed to produce an acceptable material. US Patent 4,189,419 discloses an emulsion pressure-sensitive adhesive composition based on carboxylated styrene-butadiene rubber. Specifically, most attempts are able to produce an adhesive having either good peel adhesion or good shear adhesion, but not an adhesive having both properties.

Briefly, the invention is a polymer latex, suitable for use in a pressure sensitive adhesive, having a soft monomer, a hard monomer, an ethylenically unsaturated carboxylic acid, and a number average particle size of less than about 120 nanometers (nm). The invention also is a blend of the latex of the invention, and a tackifying amount of a tackifying resin.

More specifically, it is a pressure-sensitive adhesive formulation comprising a blend of

(A) 10 to 99 parts by weight on a solids basis of an aqueous synthetic polymer latex comprising disperse polymer particles having a number average diameter of less than about 120 nm, as measured by hydrodynamic chromatography calibrated by electron microscopy, and which individually comprise:

(1) a soft monomer in an amount to impart stickiness to the latex,

(2) a hard monomer in an amount to impart strength to the latex, and

(3) an ethylenically unsaturated carboxylic acid; and

(B) 1 to 90 parts by weight on a solids basis of a tackifying resin.

The invention further is an article carrying a dried coating of the latexes or blends of the invention. The latexes and blends of the invention exhibit a combination of both good peel adhesion and good shear adhesion.

The latexes of the instant invention employ, as major ingredients, a soft monomer and a hard monomer. These latexes also employ, as a minor ingredient, an ethylenically unsaturated carboxylic acid. The proportion of the monomers is adjusted such that the resulting latex has an optimum combination of peel adhesion and shear adhesion. Specifically, the soft monomer is added in an amount such that the latex has soft, sticky and rubbery properties; and the hard monomer is added in an amount such that the latex has hard, plastic and strength properties. The acid is added in an amount such that the latex has colloidal stability and processability. Generally, the latexes are prepared from (a) desirably 30 to 70, preferably 45 to 65, and most preferably 50 to 55, parts by weight of a soft monomer; (b) desirably 30 to 70, preferably 35 to 55, and most preferably 45 to 50, parts by weight of a hard monomer; and (c) desirably 0.05 to 10, preferably 1 to 5, and most preferably 1 to 4, parts by weight of an ethylenically unsaturated carboxylic acid.

It is also necessary to control the molar mass (molecular weight) of the latex polymers. This is most easily accomplished by including in the synthesis of the latex, a chain transfer agent. The molar mass of the polymers should be such that the polymer particles show an optimum combination of peel adhesion and shear adhesion. If a chain transfer agent is used to control molar mass, it is desirable that the chain transfer agent have a chain transfer constant similar to that of n-octyl mercaptan or t-dodecyl mercaptan. Such a chain transfer agent is desirably present in quantities of 0.5 to 5, preferably 1 to 5 and most preferably 2 to 4, weight percent, based on the total monomer weight.

While less efficient chain transfer agents may be used, the quantity added will have to be adjusted in accordance with its chain transfer constant. Such calculations are easily made by those skilled in the art.

The term "soft monomer" is meant to include those addition polymerizable monomers which, if homopolymerized, would have a relatively low glass transition temperature ($T_g$). The $T_g$ for this class of monomers is desirably less than about 25°C.

More desirably, the term "soft monomer" is meant to include a class of monomers which are open chain aliphatic conjugated diene monomers having a $T_g$ of less than about 25°C. The term "open chain aliphatic conjugated diene" is meant to include, typically, those compounds containing from 4 to 9 carbon atoms such as, for example, 1,3-butadiene; 2-methyl-1,3-butadiene; 2,3-dimethyl-1,3-butadiene; pentadiene; 2-neopentyl-1,3-butadiene and other hydrocarbon analogs of 1,3-butadiene and, in addition, the substituted 1,3-butadienes such as 2-chloro-1,3-butadiene; 2-cyano-1,3-butadiene, the substituted straight chain conjugated pentadienes, the straight chain and branched chain conjugated hexadienes, other straight and branched chain conjugated dienes having from 4 to 9 carbon atoms, and comonomeric mixtures thereof. The 1,3-butadiene hydrocarbon monomers such as those mentioned hereinbefore provide interpolymers having particularly desirable properties and are therefore preferred. The cost, ready

availability and the excellent properties of interpolymers produced therefrom makes 1,3-butadiene the most preferred open chain aliphatic conjugated diene.

The term "hard monomer" is meant to include those addition polymerizable monomers which are not carboxylic acids, and if homopolymerized, would have a relatively high $T_g$. The $T_g$ for this class of compounds is desirably greater than about 25°C.

More desirably, the term "hard monomer" is meant to include a class of monomers which are monovinylaromatic monomers having a $T_g$ of greater than about 25°C. The term "monovinylaromatic monomer" is intended to include those monomers wherein a radical of the formula:

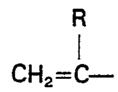

(wherein R is hydrogen or a lower alkyl such as an alkyl having from 1 to 4 carbon atoms) is attached directly to an aromatic nucleus containing from 6 to 10 carbon atoms, including those wherein the aromatic nucleus is substituted with alkyl or halogen substituents. Typical of these monomers are styrene, α-methylstyrene, ortho, meta- and para-methylstyrene; ortho-, meta- and para-ethylstyrene; o,p-dimethylstyrene; o,p-diethylstyrene; isopropylstyrene; o-methyl-p-isopropylstyrene; p-chlorostyrene; p-bromostyrene; o,p-dichlorostyrene; o,p-dibromostyrene; vinylnaphthalene; diverse vinyl (alkylnaphthalenes) and vinyl (halonaphthalenes) and comonomeric mixtures thereof. Because of considerations such as cost, availability, ease of use, etc., styrene and vinyltoluene are preferred and styrene is especially preferred as the monovinylaromatic monomer.

The aforementioned ethylenically unsaturated carboxylic acid monomers suitably employed in the practice of the invention can vary so long as such acids are copolymerizable with the other monomers of the monomer charge employed. Examples of such suitable acids include itaconic acid, acrylic acid, methacrylic acid, fumaric acid, maleic acid, vinyl benzoic acid and isopropenyl benzoic acid and preferred species thereof include acrylic acid, methacrylic acid, itaconic acid, fumaric acid and maleic acid. Naturally, comonomeric mixtures of the indicated monoethylenically unsaturated acids can be employed if desired. Moreover, such acids can be introduced to the polymerization as such or they can be formed in situ in an aqueous polymerization medium by introducing a hydrolyzable derivative of such acid (e.g., salts (such as sodium acrylate) or the anhydride (such as maleic anhydride) of the desired acid) into such aqueous medium.

The latexes may be polymerized by any of several methods well-known to those skilled in the art. Such methods include the use of a batch reaction, continuous reaction, or continuous addition batch reaction, the latter being preferred. While not critical, the latex is preferably synthesized to an end product having 40 to 60 percent solids.

The particle size of the latex is very important for an optimum combination of adhesion and shear strength. The number average particle size (diameter) of the latex particles is desirably less than 120 nm, preferably less than 110 nm, and most preferably less than 100 nm, as measured by hydrodynamic chromatography (HDC) calibrated with electron microscopy. As particle size increases, peel adhesion will increase slightly, but shear adhesion will decrease dramatically.

A preferred embodiment of the present invention is a pressure-sensitive adhesive formulation wherein the number average particle size of the latex is less than about 110 nm and the latex particles comprise 30—70 parts butadiene, 30—70 parts styrene and 0.05—10 parts itaconic acid.

It has been observed that when very small particles (76 nm and less, as measured by HDC calibrated with electron microscopy) are made, end performance of the adhesive formulations is somewhat reduced. This is believed to be the result of increased cross-linking in smaller particles and/or a core-shell structure effect, both of which may be overcome through adjustments in the polymerization conditions.

Particle size of the latexes may be controlled by a variety of techniques including careful measurement and use of surfactant, and the use of a seed latex. These methods are well-known to those skilled in the art. Particle size control of emulsion polymerized particles is explained, for example, in Meyers & Long, *Treatise on Coatings and Film Forming Compositions*, Volume I, Part 2 (1968) (See: Chapter by F. A. Miller); Elias, *Macromolecules*, Volume 2 (1977) pp. 733—736; Blachley, *Emulsion Polymerization*, (1975) Chapter 7.

After the latex is prepared, it is desirably steam distilled to remove unreacted monomer and then treated with a suitable base, desirably $NH_4OH$, to a pH of about 7 to 8.

To render the latex commercially useful as a PSA in normal application it is desirably blended with a tackifier. Tackifiers increase the tackiness of adhesives. In many cases they also increase the affinity of adhesives for specific surfaces such as plastics or metals. Tackifiers are generally organic resins and are preferably in the form of an aqueous dispersion. Typical examples of tackifiers include polyterpene resins, gum rosin, rosin esters and other rosin derivatives, oil-soluble phenolic resins, coumarone-indene resins, and petroleum hydrocarbon resins. Tackifiers are added in an amount such that the latex is given additional tack (quick stick and peel adhesion) without detracting unduly from shear adhesion. Suitable formulations will typically have 1 to 90 percent, preferably 20 to 60 percent, and most preferably 30 to 50 percent by weight, tackifier.

Optionally, certain other ingredients may be added to the PSA latex of the invention. Plasticizers such as mineral oil, liquid polybutenes, liquid polyacrylates, and lanolin may be added. Fillers such as zinc oxide, titanium dioxide, aluminum hydrate, calcium carbonate, clay, and pigments are commonly employed. Antioxidants such as rubber antioxidants, metal dithiocarbamates, and metal chelating agents may be useful in some applications.

The PSA formulated latex/tackifier is illustratively used by applying it to a substrate and drying. The formulation may be applied by a variety of well-known means including drawing, spraying, and brushing. Drying may take place at room temperature for an extended period of time (for example, 2 to 24 hours, depending upon application rate and relative humidity) or at an elevated temperature for a short period of time (for example, 250°F (121°C) for two minutes).

After drying, the formulation is usable as a PSA. If not intended to be used immediately, the exposed surface may be .protected with a paper having a suitable release coating.

Further aspects of the invention will become apparent from the following examples. In the examples, all parts are by weight. Units in brackets, are SI units (Newtons [N]) calculated from original measurements in English (U.S.) units. Peel adhesion and quick stick were evaluated on stainless steel with a Scott X-5 tester (available from Henry L. Scott Co.) at a rate of 10 inches/minute (254 mm/minute) according to Pressure Sensitive Tape Counsel (PSTC) procedures #1 and #5, respectively. The peel adhesion test involves peeling the tape off at a 180° angle after application under relatively heavy pressure. The stick test involves peeling the tape off at a 90° angle after application under relatively light pressure. Both tests are reported as the force required to remove the tape. Shear adhesion is measured according to PSTC #7 using a 1000 g mass and 120°F (48.9°C). In this test, a shear force (2° angle) is applied in an oven. The results are reported as the time required for the bond to fail.

Comparative Example 1: S/B latex

Part A:

A latex is prepared according to the formula in Table I.

TABLE I

| Initial reactor mix | Parts/100 parts monomer |
|---|---|
| Condensate water | 71.2 |
| Versenex® 80 chelating agent (1.0%)[(1)] | 0.01 |
| Itaconic acid | 2.0 |
| Seed (36.5% solids, 27 nm diameter particle size) | 0.36 |
| **Monomer mix** | |
| Styrene | 48 |
| Isooctyl thioglycolate (IOTG) | 3 |
| Butadiene | 50 |
| **Aqueous mix** | |
| DI Water | 30 |
| $NaH_2S_2O_8$ | 0.7 |
| NaOH (10%) | 0.14 |
| Dowfax® 2A1 surfactant (45%)[(2)] | 0.5 |

(1) Available from The Dow Chemical Company, Midland, MI, U.S.A. A1 percent solution of the pentasodium salt of (carboxymethyl-imino)bis-(ethylenenitrilo)tetraacetic acid.

(2) Available from The Dow Chemical Company, Midland, MI, U.S.A. A45 percent solution of the sodium salt of dodecylated sulfonated phenyl ether.

The monomer mix and aqueous mix are added to the initial reactor mix over a period of time. The additions are begun simultaneously; with the addition of the monomer mix taking 5 hours and the addition of the aqueous mix taking 6 hours. The reaction vessel is maintained at 90°C during the additions and for 1 hour thereafter. The latex is then steam distilled to remove unreacted monomer and neutralized with $NH_4OH$ to a pH of 7—8.

Part B

60 parts by weight (solids basis) of the latex are blended with 40 parts by weight (solids basis) of Picconal A600E, an aqueous dispersion of an organic resin tackifier. The blend is applied to a commercial paper tape backing with a No. 50 wire wound rod at 25 lbs/3000 ft.$^2$ (0.41 kg/m$^2$), dried for 2 minutes at 250°F (121°C) and cut into 1 inch (25.4 mm) wide strips for testing.

Example 1: Particle size

A latex is made following the procedure in Part A of Comparative Example 1. Two other latexes are

made, Sample 1—1 having more seed latex (for smaller particle size) and Sample 1—2 having less seed latex (for larger particle size) than the latex of Comparative Example 1. All samples are tackified and coated on tape backing as in Part B of Comparative Example 1 and evaluated. The results appear as in Table II.

TABLE II

| Latex sample No. | 1—1[(1)] | 1—2 | Comparative example 1[(1)] |
|---|---|---|---|
| Variables: | | | |
| Parts seed | 0.15 | 5.0 | 0.36 |
| Process: | | | |
| % Solids | 42.8 | 39.5 | —[(4)] |
| Particle size (nm) | 220[(2)] | 92.0[(3)] | 180[(2)] |
| % Residual styrene | 2.7 | 0.3 | —[(4)] |
| End-use: | | | |
| Peel adhesion (oz) | 45 | 40 | 63 |
| [N] | [12.5] | [11.1] | [17.5] |
| Shear adhesion (min) | 22 | >200 | 19 |

Notes:
(1) Not an example of the invention.
(2) Measured by Brice-Phoenix.
(3) Meaured by hydrodynamic chromatography (HDC).
(4) Not measured.

Example 2: Particle size

A latex is made as in Part A of Comparative Example 1. Several more similar latexes are made, each having the particle size varied. The samples are tackified and coated onto tape backing as in part B of Comparative Example 1. The results appear as in Table III.

TABLE III

| Latex sample | 2—1 | 2—2 | —3 | 2—4 | Comparative example 1[(1)] |
|---|---|---|---|---|---|
| Variables: | | | | | |
| Seed (parts) | 10.0 | 4.0 | 3.0 | 2.0 | 0.36 |
| Styrene (parts) | 48 | 48 | 48 | 48 | 48 |
| Butadiene (parts) | 50 | 50 | 50 | 50 | 50 |
| IOTG (parts) | 3 | 3 | 3 | 3 | 3 |
| Process: | | | | | |
| % Solids | 39.3 | 39.0 | 39.4 | 39.0 | —[(2)] |
| Particle size (nm) (HDC) | 75.6 | 95.0 | 102 | 116 | —[(2)] |
| Particle size (nm) (Brice-Phoenix) | 119[(3)] | 105 | 110 | 119 | 180 |
| % Residual styrene | 0.3 | 0.5 | 0.4 | 0.6 | —[(2)] |
| End-use: | | | | | |
| Peel adhesion (oz) [N] | 17 [4.73] | 48 [13.3] | 89 [24.7] | 108 [30.0] | 68 [18.9] |
| Quick stick (oz) [N] | —[(2)] | —[(2)] | 10 [2.78] | 16 [4.45] | 23 [6.39] |
| Shear adhesion (min) | 51 | >200 | >200 | 37 | 25 |

[(1)] Not an example of the invention.
[(2)] Not measured.
[(3)] This measurement is believed to be too large due to inaccuracies in the Brice-Phoenix light scattering technique when very small particle sizes are measured. The HDC measurement is believed to be both more accurate and more precise.

**Claims**

1. A pressure-sensitive adhesive formulation comprising a blend of
(A) 10 to 99 parts by weight on a solids basis of an aqueous synthetic polymer latex comprising disperse polymer particles having a number average diameter of less than about 120 nm, as measured by hydrodynamic chromatography calibrated by electron microscopy, and which individually comprise:
1) 30 to 70 parts by weight of a soft monomer a homopolymer of which would have a glass transition temperature less than about 25°C, in order to impart stickiness to the latex,
2) 30 to 70 parts by weight of a hard monomer a homopolymer of which would have a glass transition temperature greater than about 25°C, in order to impart strength to the latex, and
3) 0.05 to 10 parts by weight of an ethylenically unsaturated carboxylic acid; and
(B) 1 to 90 parts by weight on a solids basis of a tackifying resin.

2. The pressure-sensitive adhesive formulation of claim 1, wherein the latex particles individually comprise per 100 parts by weight of the polymer particle:
1) from 45 to 65 parts of a soft monomer;
2) from 35 to 55 parts of a hard monomer; and
3) from 1 to 5 parts of an ethylenically unsaturated carboxylic acid.

3. The pressure-sensitive adhesive formulation of claim 1, wherein the latex particles individually comprise per 100 parts by weight of the polymer particle:
1) from 50 to 55 parts of a soft monomer,
2) from 45 to 50 parts of a hard monomer
3) from 1 to 4 parts of an ethylenically unsaturated carboxylic acid.

4. The pressure-sensitive adhesive formulation of Claim 1, wherein the soft monomer is an open chain conjugated diene.

5. The pressure-sensitive adhesive formulation of Claim 1, wherein the hard monomer is a monovinylaromatic.

6. The pressure-sensitive adhesive formulation of Claim 1, wherein the number average particle size is less than about 110 nm.

7. The pressure-sensitive adhesive formulation of Claim 1, wherein the number average particle size is between 120 and 76 nm.

8. The pressure-sensitive adhesive formulation of Claim 6, wherein the latex particles comprise 30—70 parts butadiene, 30—70 parts styrene, and 0.05—10 parts itaconic acid.

9. A pressure-sensitive adhesive article comprising a substrate coated with the adhesive formulation of any of Claims 1—8.

**Patentansprüche**

1. Eine druckempfindliche klebende Zusammensetzung enthaltend ein Gemisch von

(A) 10 bis 99 Gewichtsanteilen basiert auf trockenem Gewicht von wässerigem Latex aus synthetischem Polymer enthaltend dispergierte Polymerpartikeln mit einem mittleren Durchmesser von weniger als 120 nm, gemessen durch hydrodynamische Chromatographie kalibriert durch Elektronenmikroskopie, und welche individuell enthalten:

1) 30 bis 70 Gewichtsanteile von weichem Monomer, dessen Homopolymer eine Glasübergangstemperatur von weniger als ungefähr 25 grad C gehabt hätte, um eine Festigkeit des Latex zu gewähren.

2) 30 bis 70 Gewichtsanteile von hartem Monomer, dessen Homopolymer eine Glasübergangtemperatur von mehr als ungefähr 25 grad C gehabt hätte, um eine Festigkeit des Latex zu gewähren.

3) 0,05 bis 10 Gewichtsanteile von einer äthylenischen ungesättigten Carbonsäure; und

(B) 1 bis 90 Gewichtsanteilen basiert auf trockenem Gewicht von einem klebrigen Harz.

2. Die druckempfindliche klebende Zusammensetzung vom Anspruch 1, wobei die Latexpartikeln individuell in 100 Gewichtsanteilen der Polymerpartikeln enthalten:

1) 45 bis 65 Teile weiches Monomer;

2) 35 bis 55 Teile hartes Monomer und

3) 1 bis 5 Teile von einer äthylenischen ungesättigten Carbonsäure.

3. Die druckempfindliche klebende Zusammensetzung vom Anspruch 1, wobei die Latexpartikeln individuell in 100 Gewichtsanteilen der Polymerpartikeln enthalten:

1) 50 bis 55 Teile weiches Monomer;

2) 45 bis 50 Teile hartes Monomer; und

3) 1 bis 4 Teile von einer ungesättigten Carbonsäure.

4. Die druckempfindliche klebende Zusammensetzung vom Anspruch 1, wobei das weiche Monomer ein offenkettiges konjugiertes Dien ist.

5. Die druckempfindliche klebende Zusammensetzung vom Anspruch 1, wobei das harte Monomer eine monovinylaromatische Verbindung ist.

6. Die druckempfindliche klebende Zusammensetzung vom Anspruch 1, wobei die mittlere Partikelngrösse kleiner als ungefähr 110 nm ist.

7. Die druckempfindliche klebende Zusammensetzung vom Anspruch 1, wobei die mittlere Partikelngrösse zwischen 120 und 76 nm liegt.

8. Die druckempfindliche klebende Zusammensetzung vom Anspruch 1, wobei die Latexpartikeln 30—70 Teile Butadien, 30—70 Teile Styrol, und 0,05—10 Teile Itakoninsäure enthalten.

9. Eine druckempfindliche klebende Ware enthaltend ein Substrat gedeckt mit der klebenden Zusammensetzung aus jedem der Ansprüche 1—8.

**Revendications**

1. Composition adhésive adhérant par pression comprenant un mélange de:

(A) 10 à 99 parties en poids, exprimées en matières solides, d'un latex aqueux de polymère synthétique comprenant des particules de polymère en dispersion ayant un diamètre moyen inférieur à environ 120 nm, quand on le mesure par chromatographie hydrodynamique calibrée par microscopie électronique, et qui comprennent individuellement:

1) 30 à 70 parties en poids d'un monomère souple dont un homopolymère aurait une température de transition vitreuse inférieure à 25°C environ, en vue de conférer de l'adhésivité au latex;

2) 30 à 70 parties en poids d'un monomère dur dont un homopolymère aurait une température de transition vitreuse supérieure à environ 25°C en vue de conférer de la résistance au latex; et

3) 0,05 à 10 parties en poids d'un acide carboxylique à insaturation éthylénique; et

(B) 1 à 90 parties en poids, exprimées en matières solides, d'une résine d'adhésivité.

2. Composition adhésive adhérant par pression selon la revendication 1, dans laquelle les particules de latex comprennent individuellement, pour 100 parties en poids de particules du polymère:

1) 45 à 65 parties d'un monomère souple;

2) 35 à 55 parties d'un monomère dur; et

3) 1 à 5 parties d'un acide carboxylique à insaturation éthylénique.

3. Composition adhésive adhérant par pression selon la revendication 1, dans laquelle les particules de latex comprennent individuellement, pour 100 parties en poids de particules du polymère:

1) 50 à 55 parties d'un monomère souple;

2) 45 à 50 parties d'un monomère dur;

3) 1 à 4 parties d'un acide carboxylique à insaturation éthylénique.

4. Composition adhésive adhérant par pression selon la revendication 1, dans laquelle le monomère souple est un diène conjugué à chaîne ouverte.

5. Composition adhésive adhérant par pression selon la revendication 1, dans laquelle le monomère dur est un monomère monovinylaromatique.

6. Composition adhésive adhérant par pression selon la revendication 1, dans laquelle la taille moyenne des particules est inférieure à environ 110 nm.

7. Composition adhésive adhérant par pression selon la revendication 1, dans laquelle la taille moyenne des particules est comprise entre 120 et 76 nm.

8. Composition adhésive adhérant par pression selon la revendication 1, dans laquelle les particules de latex comprennent 30 à 70 parties de butadiène, 30 à 70 parties de styrène et 0,05 et 10 parties d'acide itaconique.

9. Article adhésif adhérant par pression, comprenant un substrat enduit d'une composition adhésive selon l'une quelconque des revendications 1 à 8.